# DEMANDE DE BREVET EUROPEEN

(11) **EP 3 038 426 A1**
(43) Date de publication de la demande: **29.06.2016**
(21) Numéro de dépôt: 15201017.9
(22) Date de dépôt: 18.12.2015
(51) Int. Cl.: H04W 84/18, H04W 52/02, G08G 1/14, H04W 76/04, H04W 40/10, H04W 40/08, H04W 52/46

(54) **RÉSEAU DE DISPOSITIFS DE MESURE COMMUNIQUANT PAR LIAISON RADIO**

(30) Priorité: 22.12.2014 FR 1463118
(71) Demandeur: COMMISSARIAT A L'ENERGIE ATOMIQUE ET AUX ENERGIES ALTERNATIVES, 75015 Paris (FR)
(72) Inventeur: MAMAN, Mickael, 38000 Grenoble (FR); ROBINET, Antoine, 38210 Tullins (FR); VASSILEV, Andrea, 38600 Fontaine (FR)
(74) Mandataire: Thibon, Laurent

(57) **Abrégé**

L'invention concerne un système (100 ; 200) comportant : une unité de centralisation (101) ; et une pluralité de dispositifs (103) de détection et/ou de mesure, chaque dispositif (103) comprenant un module radio adapté à communiquer avec l'unité de centralisation (101), et un capteur distinct du module radio, adapté à mesurer une grandeur physique représentative d'une variation de l'environnement du dispositif, dans lequel chaque dispositif (103) est adapté à ajuster au moins un paramètre de configuration de son module radio en tenant compte d'une mesure effectuée par son capteur.

## Description

### Domaine

La présente demande concerne le domaine des réseaux de dispositifs de mesure et/ou de détection, et notamment de dispositifs de mesure et/ou de détection adaptés à communiquer par liaison radio. Elle concerne plus particulièrement un système intelligent de gestion de trafic ou de stationnement comportant un tel réseau. Elle peut cependant, plus généralement, avoir des applications dans d'autres domaines, comme cela sera expliqué plus en détail à la fin de la présente description.

### Exposé de l'art antérieur

Il a déjà été proposé, par exemple dans les demandes de brevet US20020190856, US20120161987 et US2006010910, des systèmes de gestion de trafic ou de stationnement comportant une pluralité de dispositifs de détection de véhicules déployés dans une zone de couverture, par exemple enfouis dans une chaussée ou sous des emplacements de stationnement, chaque dispositif étant adapté à communiquer par liaison radio avec une unité de centralisation.

Les applications des systèmes de ce type sont diverses. Par exemple, un système de gestion de stationnement peut permettre d'informer en temps réel un usager de la disponibilité ou non d'un emplacement de stationnement, ou de le guider directement vers un emplacement libre. Dans le cas d'un système de gestion de trafic, le système peut être adapté à informer en temps réel les usagers de la densité du trafic détecté, par exemple en vue de calculer des temps de parcours et/ou de proposer des itinéraires alternatifs.

Les dispositifs de détection déployés dans le sol sont généralement des dispositifs autonomes, alimentés par des batteries, chaque dispositif comportant par exemple un capteur de véhicules et un module de communication radio. Les opérations de remplacement des batteries étant relativement complexes et coûteuses, il existe un besoin d'optimiser la consommation énergétique de ces dispositifs, tout en préservant ou en améliorant la robustesse des liens radio avec l'unité de centralisation.

### Résumé

Pour cela, un mode de réalisation prévoit un système comportant : une unité de centralisation ; et une pluralité de dispositifs de détection et/ou de mesure, chaque dispositif comprenant un module radio adapté à communiquer avec l'unité de centralisation, et un capteur distinct du module radio, adapté à mesurer une grandeur physique représentative d'une variation de l'environnement du dispositif, dans lequel chaque dispositif est adapté à ajuster au moins un paramètre de configuration de son module radio en tenant compte d'une mesure effectuée par son capteur.

Selon un mode de réalisation, le paramètre est un paramètre du groupe comprenant : la puissance d'émission du module radio ; la sensibilité en réception du module radio ; le débit d'émission du module radio ; la fréquence porteuse d'émission du module radio ; la directivité de l'antenne du module radio ; et le chemin de routage des communications entre le module radio et l'unité de centralisation.

Selon un mode de réalisation, dans chaque dispositif, le capteur est un capteur de champ magnétique.

Selon un mode de réalisation, chaque dispositif est adapté à effectuer ledit ajustement avant le début d'une phase de communication radio entre le dispositif et l'unité de centralisation.

Selon un mode de réalisation, dans chaque dispositif, le module radio est réglable en puissance d'émission.

Selon un mode de réalisation, le réseau formé par les dispositifs et l'unité de centralisation présente une topologie telle qu'il existe plusieurs chemins possibles de routage des communications entre chaque dispositif et l'unité de centralisation, et chaque dispositif peut être réglé pour sélectionner un chemin de routage spécifique de ses communications avec l'unité de centralisation.

Selon un mode de réalisation, le système comprend en outre au moins un répéteur adapté à relayer des communications entre un dispositif et l'unité de centralisation.

Selon un mode de réalisation, chaque dispositif comprend une unité de commande de son capteur et de son module radio, et de traitement des données fournies par son capteur.

Selon un mode de réalisation, chaque dispositif comprend une batterie électrique pour son alimentation.

Selon un mode de réalisation, chaque dispositif est adapté à décider de reporter ou non une communication radio en tenant compte d'une mesure effectuée par son capteur.

Un autre mode de réalisation prévoit l'application d'un système du type susmentionné à la gestion de trafic ou de stationnement de véhicules automobiles, le capteur de chaque dispositif étant un capteur de véhicules.

Selon un mode de réalisation, les dispositifs sont destinés à être enfouis dans le sol, par exemple sous une chaussée ou sous des places de stationnement.

Un autre mode de réalisation prévoit un procédé de réglage du module radio d'un dispositif de détection et/ou de mesure comportant un module radio adapté à communiquer avec une unité de centralisation externe au dispositif, et un capteur distinct du module radio adapté à mesurer une grandeur physique représentative d'une variation de l'environnement du dispositif, ce procédé comportant les étapes suivantes : lire une valeur de sortie du capteur ; et ajuster au moins un paramètre de configuration du module radio en tenant compte de ladite valeur de sortie du capteur.

Selon un mode de réalisation, le paramètre est un paramètre du groupe comprenant : la puissance d'émission du module radio ; la sensibilité en réception du module radio ; le débit d'émission du module radio ; la fréquence porteuse d'émission du module radio ; la directivité de l'antenne du module radio ; et le chemin de routage des communications entre le module radio et l'unité de centralisation.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente schématiquement un exemple de topologie d'un système de gestion de trafic ou de stationnement ;
la figure 2 représente schématiquement un autre exemple de topologie d'un système de gestion de trafic ou de stationnement ;
la figure 3 représente schématiquement, sous forme de blocs, un exemple d'un mode de réalisation d'un dispositif de détection de véhicule d'un système de gestion de trafic ou de stationnement ; et
la figure 4 représente schématiquement, sous forme de blocs, un mode de réalisation d'un procédé de commande d'un dispositif de détection de véhicule d'un système de gestion de trafic ou de stationnement.

### Description détaillée

Par souci de clarté, de mêmes éléments ont été désignés par de mêmes références aux différentes figures. De plus, seuls les éléments utiles à la compréhension des modes de réalisation ont été détaillés.

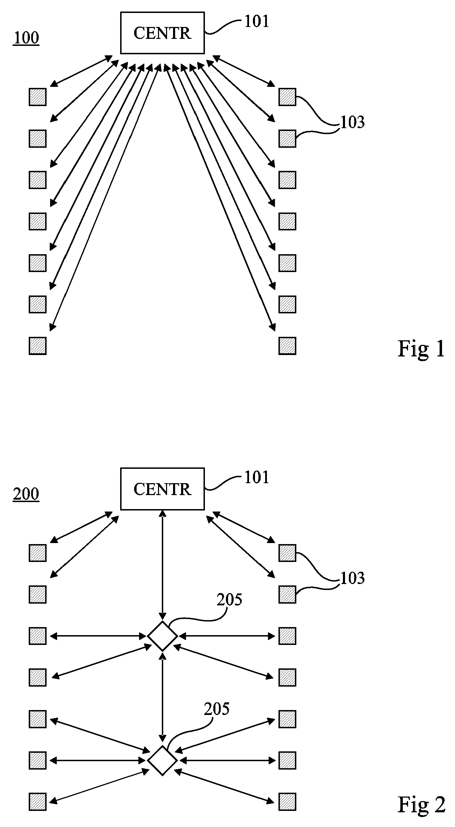

La figure 1 représente schématiquement un exemple de réalisation d'un système 100 de gestion de trafic ou de stationnement. Le système 100 de la figure 1 comprend une unité de centralisation 101 (CENTR), et une pluralité de dispositifs de détection de véhicules 103 adaptés à communiquer par liaison radio avec l'unité de centralisation 101.

L'unité de centralisation 101 comprend un module d'émission-réception radio, et est adaptée à coordonner les communications avec les dispositifs 103, et à collecter et centraliser les données transmises par les dispositifs 103. A titre d'exemple, l'unité de centralisation 101 est reliée à une station locale (non représentée) centralisant les communications avec plusieurs unités 101, la station locale étant elle-même reliée à un serveur central (non représenté), centralisant les communications avec plusieurs stations locales. L'unité de centralisation 101 peut être alimentée par une source permanente d'électricité, par exemple un réseau traditionnel de distribution d'électricité.

Chaque dispositif 103 comprend un capteur adapté à mesurer une grandeur physique représentative de la présence ou non d'un véhicule au voisinage du dispositif, et un module d'émission-réception radio adapté à communiquer avec l'unité de centralisation 101. Les dispositifs 103 sont des dispositifs autonomes, c'est-à-dire non reliés à un réseau de distribution d'électricité externe. A titre d'exemple, chaque dispositif 103 comprend, pour son alimentation, une batterie électrique éventuellement couplée à un dispositif de récupération d'énergie.

Dans l'exemple de la figure 1, l'unité de centralisation 101 et les dispositifs de détection 103 forment un réseau présentant une topologie en étoile, c'est-à-dire que chaque dispositif de détection 103 ne peut communiquer directement qu'avec l'unité de centralisation 101. En particulier, une communication directe entre deux dispositifs de détection 103 n'est pas possible.

A titre d'exemple, chaque dispositif 103 peut être configuré pour effectuer périodiquement des mesures au moyen de son capteur de véhicules, et pour initier une communication avec l'unité de centralisation 101 chaque fois qu'il détecte un évènement spécifique tel qu'une arrivée de véhicule au voisinage du dispositif 103, ou un départ de véhicule, afin d'informer l'unité 101 de cet évènement. A titre de variante ou en complément, chaque dispositif 103 peut être configuré pour effectuer périodiquement des mesures au moyen de son capteur de véhicules à une première fréquence, par exemple toutes les 1 à 5 secondes, et pour communiquer périodiquement avec l'unité de centralisation 101 à une deuxième fréquence inférieure à la première fréquence, par exemple toutes les 1 à 5 minutes, afin de lui transmettre des données acquises par son capteur de véhicules.

La figure 2 représente schématiquement un autre exemple de réalisation d'un système 200 de gestion de trafic ou de stationnement. Le système 200 de la figure 2 comprend des éléments structurels et fonctionnels communs avec le système 100 de la figure 1. Seules les différences entre le système 200 de la figure 2 et le système 100 de la figure 1 seront détaillées ci-après.

Le système 200 de la figure 2 diffère du système 100 de la figure 1 principalement par la topologie ou l'architecture du réseau comprenant l'unité de centralisation 101 et les dispositifs de détection de véhicules 103.

Outre l'unité de centralisation 101 et les dispositifs de détection 103, le système 200 de la figure 2 comprend un ou plusieurs répéteurs 205. Chaque répéteur 205 comprend un module d'émission-réception radio et est adapté à relayer les communications entre l'unité de centralisation 101 et les dispositifs de détection 103. Chaque répéteur 205 peut être alimenté par une source d'électricité externe permanente, par exemple un réseau traditionnel de distribution d'électricité, ou par une batterie. A titre de variante, chaque répéteur 205 peut être associé à un dispositif de détection 103 et être alimenté par la même batterie que ce dispositif 103. En d'autres termes, un répéteur peut être un dispositif de détection 103 intégrant une fonction supplémentaire de relayage des communications.

Dans l'exemple de la figure 2, l'unité de centralisation 101, les dispositifs de détection 103 et les répéteurs 205 forment un réseau présentant une topologie semi-maillée, c'est-à-dire que chaque dispositif de détection 103 ne peut communiquer directement qu'avec l'unité de centralisation 101 ou avec les répéteurs 205. Les répéteurs 205 permettent notamment d'augmenter la couverture du réseau et d'améliorer la robustesse des communications.

Une différence entre le système 200 de la figure 2 et le système 100 de la figure 1 est que, dans le système 200 de la figure 2, plusieurs chemins de routage existent entre chaque dispositif de détection 103 et l'unité de centralisation 101.

Les modes de réalisation décrits ne se limitent pas aux exemples décrits en relation avec les figures 1 et 2 de topologies du réseau comprenant l'unité de centralisation 101 et les dispositifs de détection de véhicules 103. Plus généralement, les modes de réalisation décrits s'appliquent à tous types de topologies de réseau. A titre d'exemple, le réseau peut présenter une topologie en arbre, c'est-à-dire dans laquelle chaque dispositif 103 est adapté à communiquer directement uniquement avec un noeud de rang supérieur constitué par un autre dispositif 103, ou par l'unité de centralisation 101 qui définit le sommet de l'arborescence. A titre de variante, le réseau peut présenter une topologie entièrement maillée, c'est-à-dire dans laquelle chaque dispositif 103 peut communiquer directement avec n'importe quel autre dispositif 103 du réseau (chaque dispositif 103 intègre alors un répéteur ou une fonction de relayage).

Un problème qui se pose dans les systèmes de gestion de trafic ou de stationnement est que les liaisons radio entre les dispositifs de détection 103 et l'unité de centralisation 101 sont susceptibles d'être fortement perturbées par la présence des véhicules.

Pour limiter les risques de rupture de communication, on peut prévoir des dispositifs de détection 103 émettant à des puissances élevées. Toutefois, ceci entraine une consommation d'énergie électrique élevée par les dispositifs 103, réduisant ainsi leur autonomie.

Pour augmenter l'autonomie des dispositifs de détection 103, chaque dispositif 103 peut avoir une puissance d'émission réglable. Chaque dispositif 103 peut alors être configuré pour, au début d'une communication avec l'unité de centralisation 101, mesurer, via son module radio, un indicateur de la qualité de la liaison radio, puis ajuster en conséquence sa puissance d'émission. Pour cela, le dispositif 103 peut par exemple :
- émettre une première fois à sa puissance d'émission maximale pour initier la communication avec l'unité 101 ;
- mesurer, via son module radio, une grandeur représentative de la puissance du signal émis en retour par l'unité 101, par exemple un indicateur du type généralement désigné dans la technique par l'acronyme RSSI, de l'anglais "Received Signal Strength Indication" (indicateur de puissance du signal reçu) ; puis
- si la qualité de la liaison radio est suffisante, diminuer sa puissance d'émission pour la suite de la communication.

Toutefois, un inconvénient est que l'ajustement de la puissance d'émission n'est effectué qu'après un premier échange non optimisé avec l'unité de centralisation 101, réalisé à la puissance maximale d'émission du dispositif 103. Il en résulte une consommation d'énergie électrique relativement élevée.

Par ailleurs, dans le cas où le réseau comprenant les dispositifs de détection 103 et l'unité de centralisation 101 présente une topologie telle qu'il existe plusieurs chemins possibles de routage des communications entre chaque dispositif 103 et l'unité 101, chaque dispositif 103 peut être configuré pour, au début d'une communication avec l'unité de centralisation 101, mesurer, via son module radio, un indicateur de la qualité de la liaison radio pour un premier chemin de routage (par exemple le chemin le plus court ou le dernier chemin utilisé), et, si la qualité de la liaison est insuffisante, sélectionner un autre chemin de routage. Pour cela, le dispositif 103 peut par exemple :
- émettre une première fois via un premier chemin de routage pour initier la communication avec l'unité 101 ;
- mesurer, via son module radio, une grandeur représentative de la puissance du signal émis en retour par l'unité 101, par exemple un indicateur du type RSSI ; puis
- si la qualité de la liaison n'est pas suffisante, sélectionner un autre chemin de routage.

Toutefois, un inconvénient est que l'ajustement du chemin de routage passe par un premier échange non optimisé avec l'unité de centralisation 101, ce qui entraine une consommation d'énergie relativement élevée et/ou des problèmes de fiabilité des communications.

Selon un aspect d'un mode de réalisation, on prévoit un système de gestion de trafic ou de stationnement dans lequel chaque dispositif de détection de véhicule 103 est adapté à ajuster au moins un paramètre de configuration de son module radio en tenant compte d'une mesure effectuée par son capteur de véhicules.

A titre d'exemple, le ou les paramètres radio ajustés par le dispositif 103 peuvent être choisis parmi les suivants :
la puissance d'émission de son module radio (si cette puissance est réglable) ;
la sensibilité en réception de son module radio (si cette sensibilité est réglable) ;
le débit d'émission des données par son module radio (si ce débit est réglable) ;
la fréquence porteuse d'émission de son module radio (si cette fréquence est réglable) ;
la directivité de l'antenne de son module radio (si cette directivité est réglable) ; et
le chemin de routage des communications entre son module radio et l'unité de centralisation 101 (si le réseau comprenant les dispositifs de détection 103 et l'unité de centralisation 101 présente une topologie telle qu'il existe plusieurs chemins de routage entre le dispositif 103 et l'unité 101).

Les inventeurs ont en effet constaté que les mesures effectuées par le capteur de véhicules d'un dispositif de détection de véhicules 103 sont représentatives de la qualité du lien radio entre ce dispositif et l'unité de centralisation 101. En effet, les mesures effectuées par le capteur de véhicules permettent de déterminer si un véhicule est susceptible de gêner la communication entre le dispositif 103 et l'unité 101. On propose donc ici, avant de débuter une communication entre le dispositif 103 et l'unité de centralisation 101, d'ajuster les paramètres de communication radio du dispositif 103 en tenant compte des mesures fournies par son capteur de véhicules.

Ainsi, chaque dispositif 103 peut, avant le début d'une communication avec l'unité de centralisation 101, mesurer, via son capteur de véhicules, une grandeur physique représentative de la présence ou non d'un véhicule au voisinage du dispositif, et régler en conséquence un ou plusieurs paramètres de son module radio.

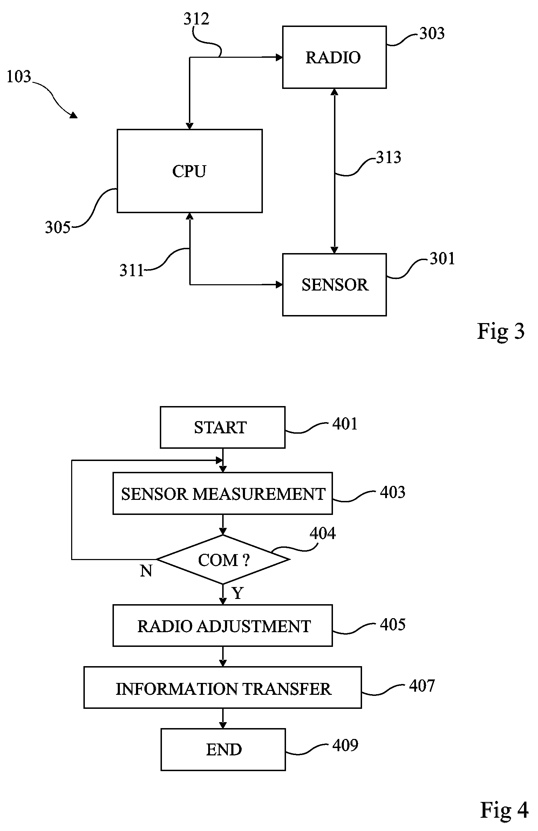

La figure 3 représente schématiquement, sous forme de blocs, un exemple d'un mode de réalisation d'un dispositif de détection de véhicules 103 d'un système de gestion de trafic ou de stationnement.

Dans cet exemple, le dispositif 103 comprend au moins un capteur de véhicules 301 (SENSOR) adapté à mesurer une grandeur physique représentative de la présence ou non d'un véhicule au voisinage du dispositif 103. Le capteur 301 est de préférence un magnétomètre. Une étude menée par les inventeurs a en effet montré qu'il existe une corrélation forte entre l'intensité du champ magnétique au voisinage du dispositif de détection 103, et l'indicateur RSSI de la qualité de la liaison radio entre le dispositif 103 et l'unité 101. Plus particulièrement, lorsque l'intensité du champ magnétique mesuré augmente, l'indicateur de puissance reçue (RSSI) par le dispositif 103 diminue, et inversement. Les modes de réalisation décrits ne se limitent toutefois pas à ce cas particulier. A titre de variante, le capteur 301 peut être un capteur à ultrasons, un capteur optique, ou tout autre capteur adapté à détecter la présence d'un véhicule.

Le dispositif 103 comprend en outre un module d'émission-réception radio 303 (RADIO) adapté à communiquer avec l'unité de centralisation 101. Le module 303 comprend des moyens de réglage de sa puissance d'émission, et/ou des moyens de réglage de sa sensibilité en réception, et/ou des moyens de réglage de son débit d'émission de données ; et/ou des moyens de réglage de sa fréquence porteuse d'émission ; et/ou des moyens de réglage de la directivité de son antenne ; et/ou des moyens de réglage du chemin de routage de ses communications avec l'unité de centralisation 101.

Le dispositif 103 comprend en outre une unité de commande et de traitement 305 (CPU), par exemple un microprocesseur ou tout autre circuit adapté, reliée au capteur 301 et au module radio 303 comme illustré schématiquement par les flèches référencées 311 et 312 sur la figure 3. L'unité 305 est adaptée à commander l'acquisition de mesures par le capteur 301, et à recevoir les valeurs de mesure fournies par le capteur 301. L'unité 305 est en outre adaptée à commander le module radio 303 pour émettre des données à destination de l'unité de centralisation 101, par exemple des mesures effectuées par le capteur 301, ou des données déterminées à partir des mesures effectuées par le capteur 301. L'unité 305 est de plus adaptée à régler le ou les paramètres réglables susmentionnés du module radio 303, en tenant compte des mesures effectuées par le capteur 301.

A titre de variante, le capteur 301 est relié directement au module radio 303, comme illustré schématiquement par la flèche référencée 313 sur la figure 3. Le module radio 303 est alors adapté à recevoir des mesures fournies par le capteur 301, et à émettre des données correspondantes à destination de l'unité de centralisation 101. Le module radio 303 est en outre adapté à ajuster au moins l'un des paramètres réglables susmentionnés en tenant compte des mesures effectuées par le capteur 301.

La figure 4 représente schématiquement, sous forme de blocs, un exemple d'un procédé de commande du dispositif de détection de véhicule 103 de la figure 3. La figure 4 représente plus particulièrement le déroulement d'une phase de mesure ou de détection et de transmission de données du dispositif 103 vers l'unité de centralisation 101 du système de gestion de trafic ou de stationnement.

Lors d'une étape 401 (START), une phase de mesure ou de détection et de transmission de données est initiée par le dispositif 103.

Lors d'une étape 403 (SENSOR MEASUREMENT), une valeur de sortie du capteur 301 est acquise par le dispositif 103.

Lors d'une étape 404 (COM ?) postérieure à l'étape 403, le dispositif 103 détermine, par exemple en tenant compte de la valeur lue à l'étape 403, si des données doivent être communiquées à l'unité de centralisation 101. Si aucune communication ne doit être effectuée, l'étape 403, puis l'étape 404, peuvent être réitérées, éventuellement après un temps de pause.

Si une communication doit être effectuée, après l'étape 403 et avant le début de la communication radio à proprement parler entre le dispositif 103 et l'unité de centralisation 101, une étape 405 (RADIO ADJUSTMENT) d'ajustement d'au moins un des paramètres susmentionnés de configuration du module radio 303, en tenant compte de la valeur de sortie du capteur 301 acquise à l'étape 403, est mise en oeuvre.

Lors d'une étape 407 (INFORMATION TRANSFER) postérieure à l'étape 405, la communication radio proprement dite entre le dispositif 103 et l'unité de centralisation 101 est mise en oeuvre, en utilisant le réglage du module radio 303 déterminé à l'étape 405.

Lors d'une étape 409 (END) postérieure à l'étape 407, la phase de transmission de données se termine.

Un avantage des modes de réalisation décrits est que le ou les paramètres de communication radio du dispositif 103 peuvent être ajustés en fonction de la qualité de lien radio, avant même l'initialisation de la communication radio entre le dispositif 103 et l'unité de centralisation 101. Il en résulte une diminution de la consommation électrique du dispositif 103 et/ou une amélioration de la robustesse des communications, par rapport à des systèmes dans lesquels l'ajustement des paramètres de communication radio passe par un premier échange de données "non-optimisé" entre le dispositif 103 et l'unité de centralisation 101.

On notera que la réalisation du réglage des paramètres radio à partir des seules données fournies par le capteur de véhicules est d'autant plus avantageuse que la consommation électrique du capteur est généralement faible par rapport à la consommation électrique du module radio.

Des modes de réalisation particuliers ont été décrits. Diverses variantes et modifications apparaîtront à l'homme de l'art. En particulier, pour améliorer encore le bilan énergétique des communications entre les dispositifs de détection de véhicules 103 et l'unité de centralisation 101, chaque dispositif 103 peut, en tenant compte des mesures effectuées par son capteur de véhicules, décider de reporter une communication radio à un instant susceptible d'être plus favorable en termes de fiabilité et de bilan énergétique de la communication. A titre d'exemple, dans le cas d'un système de gestion de trafic, le dispositif 103 peut attendre le départ d'un véhicule préalablement détecté pour transmettre à l'unité de centralisation 101 une information quant au passage de ce véhicule, afin d'éviter que la communication ne soit perturbée par le véhicule.

Par ailleurs, bien que l'on ait détaillé ci-dessus un exemple de réalisation appliqué à un système de gestion de trafic ou de stationnement, dans lequel les dispositifs 103 sont des dispositifs de détection de véhicules, les modes de réalisation décrits ne se limitent pas à cette application particulière. La solution proposée peut, plus généralement, avoir des applications dans d'autres systèmes utilisant un réseau de dispositifs de détection ou de mesure adaptés à communiquer par liaison radio. A titre d'exemple, les dispositifs 103 peuvent être des dispositifs de mesure de température et/ou de taux d'humidité installés dans une habitation, une usine, un environnement extérieur, etc. Chaque dispositif 103 comportant alors un capteur de température et/ou un capteur de taux d'humidité, et le module radio du dispositif peut être réglé en fonction des valeurs de température et/ou de taux d'humidité mesurées par le capteur. Plus généralement, les modes de réalisation décrits peuvent être adaptés à tout système comportant un réseau de dispositifs de mesure comportant chacun un module radio et au moins un capteur de variation d'environnement distinct du module radio, dès lors qu'il existe une relation entre la qualité de la liaison radio et la grandeur mesurée par le capteur.

## Revendications

1. Système (100 ; 200) de gestion de trafic ou de stationnement comportant :
une unité de centralisation (101) ; et
une pluralité de dispositifs (103) de détection de véhicules, chaque dispositif (103) comprenant un module radio (303) adapté à communiquer avec l'unité de centralisation (101), et un capteur (301) distinct du module radio (303), adapté à mesurer une grandeur physique représentative de la présence ou non d'un véhicule au voisinage du dispositif (103),
dans lequel chaque dispositif (103) est adapté à ajuster au moins un paramètre de configuration de son module radio (303) en tenant compte d'une mesure effectuée par son capteur (301).

2. Système (100 ; 200) selon la revendication 1, dans lequel ledit au moins un paramètre est un paramètre du groupe comprenant :
la puissance d'émission du module radio (303) ;
la sensibilité en réception du module radio (303) ;
le débit d'émission du module radio (303) ;
la fréquence porteuse d'émission du module radio (303) ;
la directivité de l'antenne du module radio (303) ; et
le chemin de routage des communications entre le module radio (303) et l'unité de centralisation (101).

3. Système (100 ; 200) selon la revendication 1 ou 2, dans lequel, dans chaque dispositif (103), le capteur (301) est un capteur de champ magnétique.

4. Système (100 ; 200) selon l'une quelconque des revendications 1 à 3, dans lequel chaque dispositif (103) est adapté à effectuer ledit ajustement avant le début d'une phase de communication radio entre le dispositif (103) et l'unité de centralisation (101).

5. Système (100 ; 200) selon l'une quelconque des revendications 1 à 4, dans lequel, dans chaque dispositif (103), le module radio (303) est réglable en puissance d'émission.

6. Système (200) selon l'une quelconque des revendications 1 à 5, dans lequel :
le réseau formé par les dispositifs (103) et l'unité de centralisation (101) présente une topologie telle qu'il existe plusieurs chemins possibles de routage des communications entre chaque dispositif (103) et l'unité de centralisation (101) ; et
chaque dispositif (103) peut être réglé pour sélectionner un chemin de routage spécifique de ses communications avec l'unité de centralisation (101).

7. Système (200) selon l'une quelconque des revendications 1 à 6, comprenant en outre au moins un répéteur (205) adapté à relayer des communications entre un dispositif (103) et l'unité de centralisation (101).

8. Système (100 ; 200) selon l'une quelconque des revendications 1 à 7, dans lequel chaque dispositif (103) comprend une unité (305) de commande de son capteur (301) et de son module radio (303), et de traitement des données fournies par son capteur (301).

9. Système (100 ; 200) selon l'une quelconque des revendications 1 à 8, dans lequel chaque dispositif (103) comprend une batterie électrique pour son alimentation.

10. Système (100 ; 200) selon l'une quelconque des revendications 1 à 9, dans lequel chaque dispositif (103) est adapté à décider de reporter ou non une communication radio en tenant compte d'une mesure effectuée par son capteur (301).

11. Système selon l'une quelconque des revendications 1 à 10, dans lequel les dispositifs (103) sont destinés à être enfouis dans le sol, par exemple sous une chaussée ou sous des places de stationnement.

12. Procédé de réglage du module radio (303) d'un dispositif (103) de détection de véhicules comportant un module radio (303) adapté à communiquer avec une unité de centralisation (101) externe au dispositif, et un capteur (301) distinct du module radio (303) adapté à mesurer une grandeur physique représentative de la présence ou non d'un véhicule au voisinage du dispositif (103), ce procédé comportant les étapes suivantes :
lire une valeur de sortie du capteur (303) ; et
ajuster au moins un paramètre de configuration du module radio (303) en tenant compte de ladite valeur de sortie du capteur (303).

13. Procédé selon la revendication 12, dans lequel ledit au moins un paramètre est un paramètre du groupe comprenant :
la puissance d'émission du module radio (303) ;
la sensibilité en réception du module radio (303) ;
le débit d'émission du module radio (303) ;
la fréquence porteuse d'émission du module radio (303) ;
la directivité de l'antenne du module radio (303) ; et
le chemin de routage des communications entre le module radio (303) et l'unité de centralisation (101).
